(19)

Europäisches Patentamt

European Patent Office

Office européen des brevets

(11) **EP 2 584 710 A1**

(12) **EUROPEAN PATENT APPLICATION**

(43) Date of publication:
24.04.2013 Bulletin 2013/17

(51) Int Cl.:
*H04B 3/46* (2006.01)    *H04M 3/30* (2006.01)

(21) Application number: **11290485.9**

(22) Date of filing: **19.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Dupuis, Nicolas**
  **B-4000 Liège (BE)**
• **Drooghaag, Benoit**
  **B-1421 Ophain-Bois-Seigneur-Isaac (BE)**

(74) Representative: **Plas, Axel Ivo Michel**
**IP HILLS NV**
**Hubert Frère-Orbanlaan 329**
**9000 Gent (BE)**

(54) **A method and tool for detecting and characterising an impedance mismatched loop segment**

(57)    To detect and characterise an impedance mismatched loop segment (113) in a transmission line:
a. channel frequency response data (702, 805, 902-905, 1002-1005) is collected from a transceiver (101, 102) coupled to the transmission line; and
b. a specific pattern is detected in the channel frequency response data (702, 805, 902-905, 1002-1005).

The specific pattern consists of an alternating sequence of troughs and peaks. The troughs are indicative for wide frequency signal reflections at an impedance mismatched loop segment. The peaks are indicative for constructive interference at particular equidistant frequencies as a result of back and forth reflections at an impedance mismatched loop segment (113). The troughs are substantially wider than the peaks.

Fig. 6

**Description**

**Field of the Invention**

The present invention generally relates to detecting in a transmission line, e.g. a Digital Subscriber Line or DSL, the presence of a loop segment having a characteristic impedance that differs from the expected one. Such loop segment introduces an impedance mismatch resulting in performance degradation of the transmission line. More particularly, the present invention aims at detecting and characterising such an impedance mismatched loop segment in a non-intrusive manner, i.e. without interrupting communication services that use the transmission line.

**Background of the Invention**

As a result of the growing market for high bandwidth services over subscriber lines such as Internet Protocol TeleVision (IPTV), Video-on-Demand (VoD) and Triple Play services, customer support for non-performing transmission lines becomes more exigent. Since the physical link that transports information in the last mile to and from the customer premises is known to be the bottleneck for quality of service (QoS), telecom manufacturers are developing analysing tools that help the access network operators to remotely detect and diagnose physical problems in wire lines used for transmission of data. Such network analysers, like for instance the Alcatel-Lucent 5530 NA, help network operators to detect physical impairments without dispatching a technician, hence reducing cost and time.

A loop segment having a characteristic impedance different from the rest of the transmission line negatively impacts the performances of the transmission line. Such impedance mismatched loop segment often appears when old patch cables are used in the main distribution frame (MDF) or street cabinet to interconnect buried cable binders.

From maintenance point of view, the intervention required in case of an impedance mismatched loop segment differs from interventions for other punctual defects like for instance a bridged tap, open loop, short circuit or fault to the ground. It is therefore important for operators to be able to distinguish an loop segment that presents an impedance mismatch from other physical line impairments.

The best existing solution for impedance mismatched loop segment detection consists in detecting a punctual defect like a bridged tap or broken loop at a particular location. The existing detection algorithms however cannot discriminate an impedance mismatch from other punctual line impairments and consequently do not enable to identify the right root cause of the problem and required intervention to solve the problem.

At present, two categories of solutions exist for detecting and localizing physical defects in transmission lines: Single Ended Line Tests (SELT) based on reflectometry, and Metallic Line Tests (MELT).

Whereas MELT is not able to detect the presence of a loop segment with impedance mismatch, SELT can detect impedance mismatched loop segments but is only able to discriminate the presence of such impedance mismatched loop segment from bridged taps or other punctual line defects in very few cases. An additional limitation of SELT is that testing the transmission line with reflectometry based measurements requires temporary interruption of services that are running over the line. SELT based analysis of the line therefore is intrusive.

It is an objective of the present invention to provide a method and tool for detecting and characterising an impedance mismatched loop segment that overcomes the drawbacks of the above mentioned prior art solutions. More particularly, it is an objective of the present invention to disclose a method and tool that enable to detect and discriminate the presence of an impedance mismatched loop segment from other physical link defects in a non-intrusive manner, i.e. without interrupting communication services running over the transmission line.

**Summary of the Invention**

According to the present invention, the above identified objectives are realized by the method for detecting and characterising an impedance mismatched loop segment in a transmission line defined by claim 1, the method comprising the steps of:

　　　a. collecting channel frequency response data from a transceiver coupled to the transmission line; and
　　　b. detecting in the channel frequency response data a pattern consisting of an alternating sequence of troughs indicative for wide frequency signal reflections and peaks indicative for constructive interference at particular equidistant frequencies, the troughs being wider the said peaks.

Thus, the basic concept of the method according to the invention consists in the automatic and non-intrusive recognition and characterization of phenomenon signatures or patterns in the channel frequency response that indicate the presence of a loop segment presenting an impedance mismatch. Since the method is based on channel frequency response data, measurements performed by transceiver chipsets during showtime can be used. In recently developed DSL Access Multiplexers (DSLAMs) for instance, channel frequency response measurements are performed without the line being out of service temporarily, and stored in the Hlog parameter maintained by the DSL chipsets. The network analyzer can collect the channel frequency response data from the DSLAM, e.g. for a given port coupled to the transmission line that will be analyzed, without disrupting communication services. As a consequence, there is no need to interrupt any services like with SELT. Furthermore, the method according to the invention is based on the insight that the patterns presented by a mismatched impedance in the channel frequency response are different from those seen in the communication channel transfer function when bridged taps or other punctual defects are present.

From electromagnetic wave propagation theory it is known that electrical signals travel through a physical medium with finite velocity and get reflected when they arrive at impedance mismatches. More particularly, when there is an impedance difference between neighboring loop segments, the incident electromagnetic wave splits in two parts: a first transmitted part and a second reflected part. The ratio between the transmitted and reflected electromagnetic power depends on the strength of the impedance mismatch. Moreover, a phase-shift is experienced by the reflected and transmitted waves depending on the value of the second medium impedance with respect to the first one. Mathematically, this is expressed as follows:

$$V_{S_r} = \Gamma V_{S_i} \tag{1}$$

$$V_{S_t} = (1 - \Gamma)V_{S_i} \tag{2}$$

with

$$\Gamma = \frac{Z_2 - Z_1}{Z_2 + Z_1} \tag{3}$$

Herein,
$\Gamma$ represents the complex reflection coefficient;
$Z_1$ represents the first medium's characteristic impedance;
$Z_2$ represents the second medium's characteristic impedance;
$S_i$ denotes the incident electromagnetic wave;
$S_t$ denotes the transmitted electromagnetic wave;
$S_r$ denotes the reflected electromagnetic wave; and
V represents the different voltages.

As a consequence, modeling reflected and transmitted signals in the presence of an impedance mismatched loop segment can be derived from summing the back and forth reflected parts and transmitted parts at the different impedance changing boundaries. The overall transmitted signal that passes through the entire transmission line and consequently is received by the far-end transceiver represents the sum of the phase-shifted and attenuated original signal and some replicated and delayed versions of this signal acting as interferences. This far-end signal gets modulated by these interferences which could be either constructive or destructive, depending on their phase-shifts and frequencies. From a spectral point of view, the channel frequency response in case a loop segment presents an impedance mismatch therefore exhibits a particular pattern of relatively wide troughs and relatively sharp peaks at particular, equidistant frequencies. More precisely, an impedance mismatched loop segment reflects back the incoming signal substantially at most of its frequencies. This results in wide troughs in the channel frequency response. For some specific frequencies however, constructive interferences, or more precisely less destructive interferences appear since the received signal gets combined with some of its delayed back-and-forth reflected versions. This results in relatively sharp, equidistant peaks in the channel frequency response. The pattern resulting from the presence of an impedance mismatch therefore differs from the pattern resulting from for instance bridged taps. Indeed, in case of a bridged tap, there is only one point for reflections, caused by the tap, as a result of which only specific frequencies are candidates to act as destructive interferences. The channel frequency response in case of bridged taps hence shows a pattern of sequential notches rather than peaks as a result of which it is distinguishable from the pattern in case of impedance mismatches through the method according to the current invention.

Optionally, as defined by claim 2, the method according to the current invention further comprises the step of:

    c. quantifying at least one parameter of the impedance mismatched loop segment by processing the channel frequency response data.

Indeed, digital signal processing techniques may not only be used to recognize patterns indicative for the presence of an impedance mismatched loop segment, but may further be applied to quantify certain parameters like for instance the strength of the impedance match, the location of the impedance mismatched loop segment along the transmission line, and the length of the impedance mismatched loop segment.

In one embodiment of the method according to the present invention, defined by claim 3, the at least one parameter comprises the length of the impedance mismatched loop segment, and quantifying this parameter comprises:

c11. detecting local maxima in the channel frequency response data and indexing the local maxima;
c12. determining frequency positions f of the local maxima; and
c13. determining the length of the impedance mismatched loop segment in kilometres as L = 50 * k / f with k representing an index number of a local maximum and f representing a frequency position in megahertz of the local maximum with index number k.

Indeed, as explained here above, the peaks in the channel frequency response result from constructive interference, i.e. interference of the transmitted wave with waves that are reflected at least two times before being transmitted to the far-end transceiver. Such waves have particular frequencies or wavelengths that satisfy the following equation:

$$2L = k\frac{\lambda}{2} \tag{4}$$

Herein,
L represents the length of the impedance mismatched loop segment;
k represents the integer index of the peak in the channel frequency response; and
$\lambda$ represents the wavelength of the wave inferring constructive interference, with:

$$\lambda = \frac{c}{f} \tag{5}$$

Herein,
f represents the frequency of the wave inferring constructive interference; and
c represents the propagation speed,
with:

$$c = 2.10^8 \,{}^{km}/_s \tag{6}$$

Substituting (6) and (5) in equation (4) hence results in:

$$L = k\frac{c}{4.f} \tag{7}$$

or

$$L = k\frac{2.10^8}{4.f} \tag{8}$$

or

$$L[km] = k\frac{200.10^6}{4.f[Hz]} \tag{9}$$

or

$$L[km] = k\frac{200}{4.f[MHz]} \qquad (10)$$

or

$$L[km] = k\frac{50}{f[MHz]} \qquad (11)$$

Equation (11) allows a digital signal processor to estimate the length L of the impedance mismatched loop segment by detecting a peak or local maximum in the channel frequency response data, determining the integer index k of this local maximum, determining the frequency positions f of the local maximum in megahertz (MHz), and determining the length L of the impedance mismatched loop segment in kilometres as L = 50 * k / f.

In a further embodiment of the method according to the present invention, defined by claim 4, the at least one parameter comprises a mismatch strength of the impedance mismatched loop segment, and quantifying this parameter comprises:

  c21. detecting local maxima in the channel frequency response data and indexing the local maxima;
  c22. determining heights h of the local maxima; and
  c23. determining the mismatch strength of the impedance mismatched loop segment as $y = a.ln(Z_2/Z_1) + b$.

Herein,
y represents the height of the peaks, expressed in decibels or dB;
$Z_1$ represents the characteristic impedance of the first loop segment, expressed in Ohm/m;
$Z_2$ represents the characteristic impedance of the second loop segment, expressed in Ohm/m; and
a and b represent model parameters that can be determined either theoretically or experimentally.

The mismatch between the impedances of two loop segments is calculated according to a linear relationship between the logarithm of the ratio between the line impedances of the two segments and the height of one of the main peaks of the transfer function expressed in dB. Extraction of such peaks is performed by a robust detection of local maxima. Computation of the height of such peaks is performed by determining the difference between the value of the curve at these local maxima and the extrapolation of the corresponding curve without impedance mismatch.

Thus, the height h of the peaks in the channel frequency response allows a digital signal processor to estimate the strength of the impedance mismatch introduced by an impedance mismatched loop segment. An advantage thereof is that repair advices and urgency of such repairs can be provided to operators. By identifying and characterising the impedance mismatched loop segment and by replacing it with an impedance matching cable, the transmission line will perform more optimally in terms of bitrate and stability.

Further optionally, as defined by claim 5, the method according to the current invention further comprises the step of:

  d. consulting a loop topology database in order to determine a location of the impedance mismatched.segment.

Thus, by combining the method of the current invention with consultation of a loop topology database or with the results of e.g. SELT, the network analyser may be enabled to localize the impedance mismatched loop segment along the transmission line. The main advantage thereof is that the operator can be given more precise repair advice with respect to the location where a technician has to replace part of the cable.

In addition to a method for detecting and characterising an impedance mismatched loop segment as defined by claim 1, the current invention also concerns a corresponding tool for detecting and characterising an impedance mismatched loop segment in a transmission line, as defined by claim 6, the tool comprising:

  a. means for collecting channel frequency response data from a transceiver coupled to the transmission line; and
  b. means for detecting a pattern consisting of a sequence of peaks in the channel frequency response.

**Brief Description of the Drawings**

Fig. 1 shows a transmission line with impedance mismatched loop segment 113;

Fig. 2 shows a a transmission line with bridged tap 114;

Fig. 3 shows three transmission lines with different punctual defects, respectively a fault 115 to the ground, a short circuit 116 and an open loop punctual defect 117;

Fig. 4 illustrates transmission and reflection of electromagnetic waves at the boundary of an impedance mismatched loop segment 113;

Fig. 5 illustrates constitution of the signal received by a far-end transceiver 102 in case of presence of an impedance mismatched loop segment 113 in a transmission line;

Fig. 6 is a flow diagram illustrating an embodiment of the method for detecting and characterizing an impedance mismatched loop segment according to the present invention;

Fig. 7 illustrates a typical pattern 702 of the channel frequency response of a transmission line with impedance mismatched loop segment;

Fig. 8 compares the typical pattern 805 of the channel frequency response of a transmission line with impedance mismatched loop segment with typical patterns of the channel frequency response of a transmission lines with bridged taps;

Fig. 9 illustrates estimating the length of an impedance mismatched loop segment in an embodiment of the method according to the present invention; and

Fig. 10 illustrates estimating the strength of an impedance mismatched in an embodiment of the method according to the present invention.

## Detailed Description of Embodiment(s)

In accordance with the current invention, the presence of a loop segment 113 or p2 whose characteristic impedance $Z_1$ differs from the characteristic impedance $Z_0$ of other segments, 111 or p1 and 112 or p3, is detected in a non-intrusive way by directly using the measurements performed by the modem chipsets during showtime. In addition the loop segment 113 is characterized by estimating certain parameters, again in a non-intrusive manner.

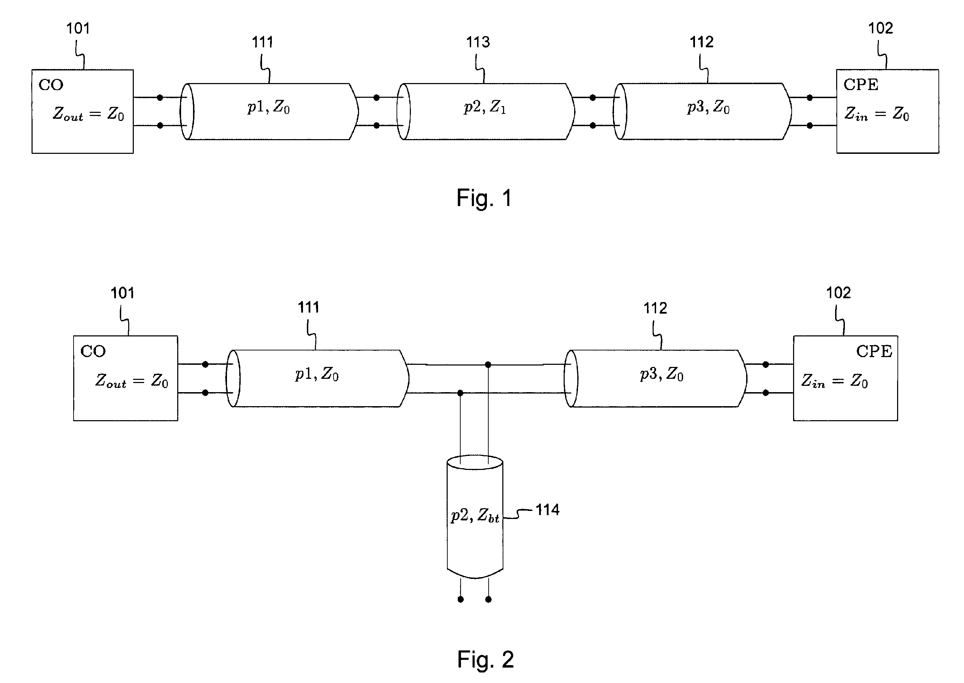

Such a transmission line with impedance mismatched loop segment 113 is drawn in Fig. 1. Fig. 1 shows a transmission line between a transceiver at the central office, 101 or CO, and a far-end transceiver at the customer premises, i.e. 102 or CPE. The characteristic output impedance of the central office transceiver 101 is $Z_{out}=Z_0$, equal to the characteristic input impedance of the far-end transceiver 102, i.e. $Z_{in}=Z_0$. If there is a loop segment presenting a different characteristic impedance, i.e. segment 113 or p2 with characteristic impedance $Z_1$, different from the expected one, i.e. $Z_0$ for loop segments p1 and p3 and transceivers 101 and 102, performance limitations will occur that negatively impact the bitrate and stability of the transmission line. The method and tool according to the invention enable to detect the presence of such segment 113 as well as to characterize it, e.g. through estimations of its length and impedance mismatch.

According to an optional extension of the method and tool according to the invention, the impedance mismatched loop segment detection and characterization is combined with consultation of topological information provided for example by a network analyzer extension platform. As a result, the impedance mismatched segment can be localized. With such knowledge on the nature and presence of an imperfection within a communication medium, identification of root causes for service degradation is achieved and pro-active repair decisions can be taken by the operator.

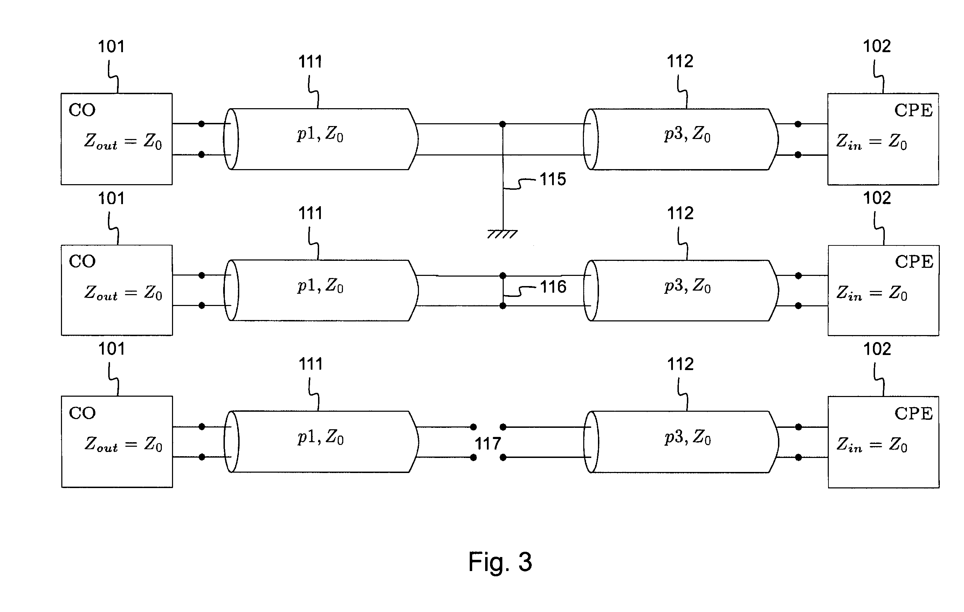

Fig. 2 and Fig. 3 illustrate other physical medium defects from which the tool and method according to the present invention must be able to discriminate the presence of an impedance mismatch because each of defects requires different repair decisions. The central office transceiver, customer premises transceiver and loop segments with matching characteristic impedance are respectively denoted 101, 102, 111 and 112, like in Fig. 1. The transmission line drawn in Fig. 1 further contains a bridged tap 114 with characteristic impedance $Z_{bt}$.

Fig. 3 shows three additional types of defects presenting impedance mismatches in the transmission line. The presence of a fault 115 to the ground in the middle of the loop, the presence of a short circuit 116, and the presence of an open loop punctual defect 117 are illustrated top-down in Fig. 3. Different testing techniques exist to identify the occurrence of such faults but the method according to the present invention enables to identify the presence of an impedance mismatched segment 113 and discriminate it from the transmission line defects shown in Fig. 2 and Fig. 3.

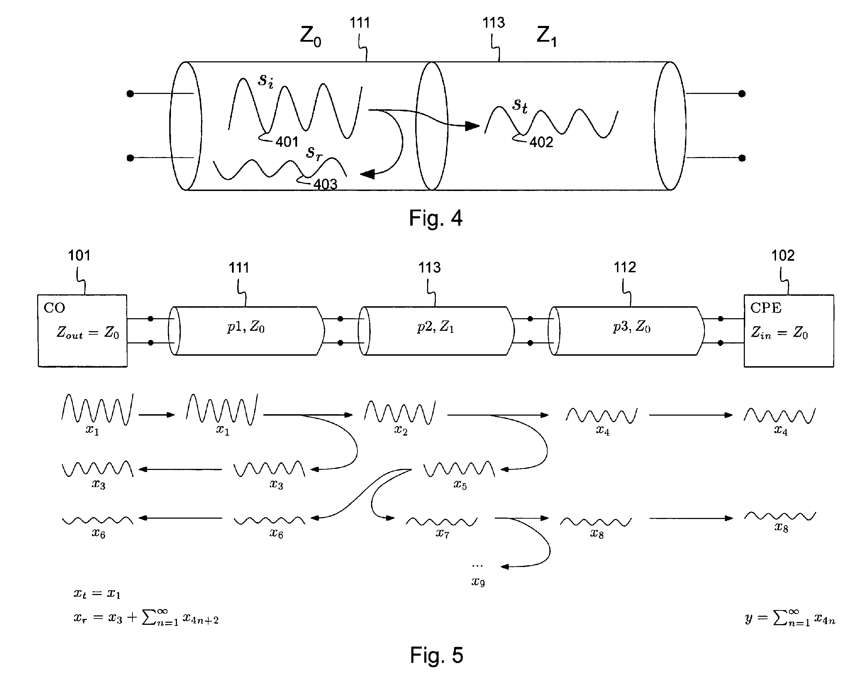

Fig. 4 shows the loop segments 111 and 113 of the transmission line depicted in Fig. 1 in more detail. An incident electrical wave, 401 or $s_i$, splits in two parts when it encounters an impedance mismatch between two loop segments. These parts are respectively the transmitted signal, 402 or $s_t$, and the reflected signal, 403 or $s_r$. The reflected and transmitted signals experience a phase-shift that depends on the difference between the characteristic impedance of the two loop segments, respectively $Z_0$ and $Z_1$ The ratio between the transmitted and reflected electromagnetic power also depends on the strength of the impedance mismatch. Mathematically, this is expressed as follows:

$$V_{S_r} = \Gamma V_{S_i} \qquad (12)$$

$$V_{S_t} = (1 - \Gamma)V_{S_i} \qquad (13)$$

with

$$\Gamma = \frac{Z_1 - Z_0}{Z_1 + Z_0} \qquad (14)$$

Herein,

$\Gamma$ represents the complex reflection coefficient;

$Z_0$ represents the characteristic impedance of loop segment 111;

$Z_1$ represents the characteristic impedance of loop segment 113;

$s_i$ denotes the incident electromagnetic wave 401;

$s_t$ denotes the transmitted electromagnetic wave 402;

$s_r$ denotes the reflected electromagnetic wave 403; and

V represents the different voltages.

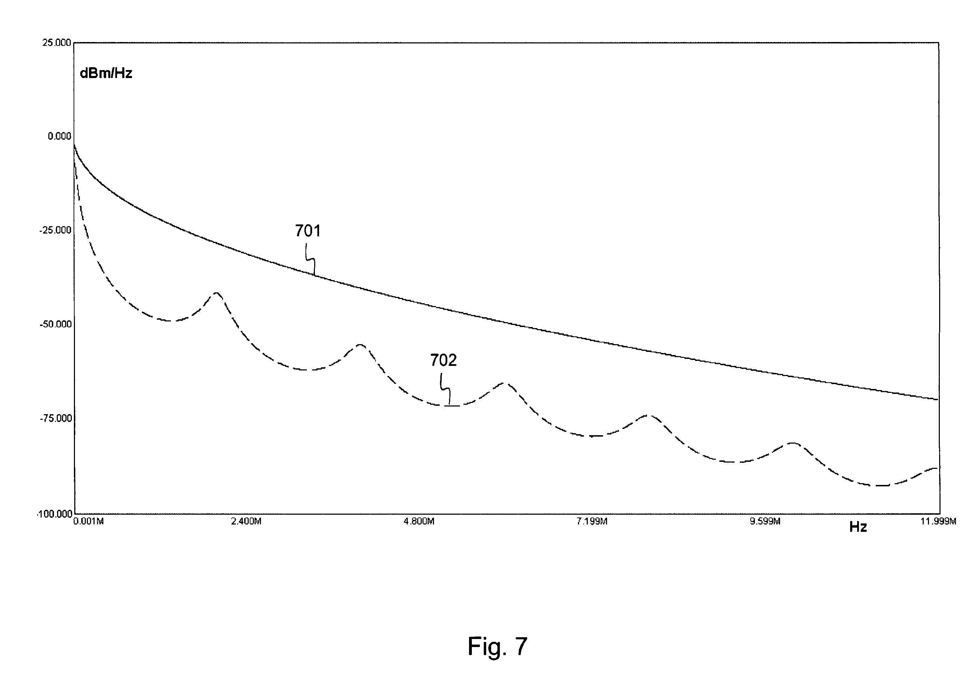

As a result, as is illustrated by Fig. 5, the overall transmitted signal y that passes through all the media, i.e. loop segments 111, 113 and 112, and that is received by the far-end receiver 102 is the sum of the phase-shifted and attenuated original signal $x_4$ and some back-and-forth reflected and delayed versions of this signal like $x_8$ acting as interferences. This far-end signal y thus gets modulated by these interferences which could be either constructive or destructive, depending on their phase-shifts and frequencies. From a spectral point of view, the channel frequency response, i.e. the Hlog data in case of DSL transceivers, exhibits particular troughs and peaks as a result of this phenomenon. This is illustrated by 702 in Fig. 7.

In Fig. 5, the signal received by the far-end modem 102, y, in the presence of an impedance mismatched loop segment 113 with impedance $Z_1$ different from the characteristic line impedance $Z_0$, consists of the sum of the attenuated and phase-shifted original signal, $x_4$, and some of its replicated and delayed versions, $x_{4n}$, with n>1. Mathematically, this is expressed as follows:

$$y = \sum_{n=1}^{\infty} x_{4n} \qquad (15)$$

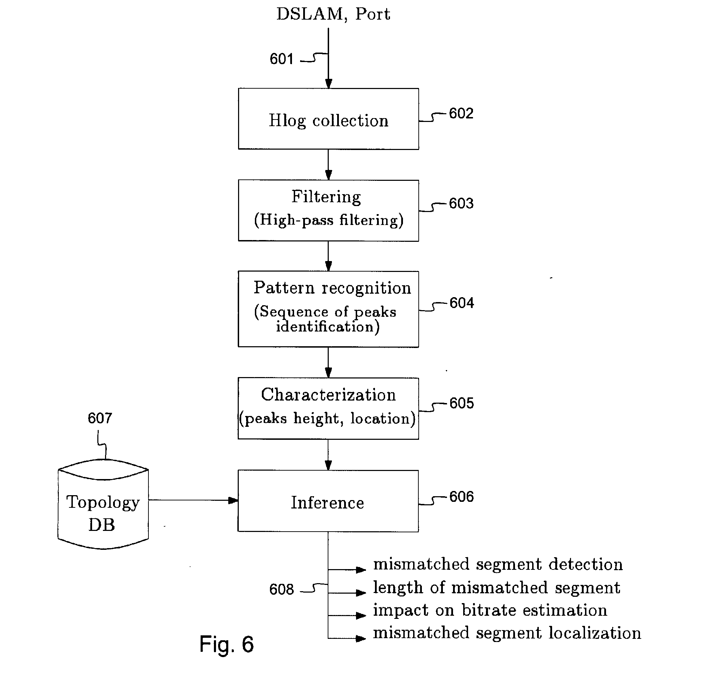

An embodiment of the method according to the present invention is illustrated by the flow diagram in Fig. 6, which represents an algorithm that for instance can be executed by a digital signal processor. Such algorithm is non-intrusive and enables detection, characterization and localization of an impedance mismatched loop segment as will be explained in the following paragraphs.

The algorithm and processor running the algorithm shall typically be embedded in a network analyzer. The algorithm follows a pattern recognition scheme. The first step 602 consists in the collection of the Hlog data 601 for a given port of central office, e.g. a DSLAM in case of a DSL network. With the latest versions of DSLAMs, this type of measurements is performed without requiring the line to be out of service. This therefore allows passive monitoring and retrieving and processing the data without interrupting showtime. As a consequence, the diagnosis according to the algorithm illustrated by Fig. 6 is clearly non-intrusive system and can be used pro-actively. The Hlog data are filtered in step 603 using a high-pass filter. Next, in step 604, pattern recognizing signal processing techniques are used in order to identify and recognize the signatures of an impedance mismatched loop segment in the Hlog data. The signal processing techniques applied in step 604 shall recognize a sequence of alternating wide troughs and peaks in the channel frequency response Hlog. The peaks are equidistant in frequency, and the troughs are substantially wider than the peaks. The identification of an impedance mismatched loop segment in other words is based on the shape, height and position of a sequence of peaks and troughs that characterize such a loop segment. Such algorithm could for instance be based on Wavelet technique, i.e. performing correlation over the entire frequency range and locations with a basic function, limited in width, having a shape similar to the expected pattern for mismatched loop impedance and tracking the samples for which the correlation is above a given threshold in order to trigger the detection.

Indeed, the presence and shape of a sequence of peaks within the Hlog data allows inferring about the presence of an impedance mismatched segment in the loop. As mentioned here above, such impedance mismatched loop segment reflects back the incoming signal $s_i$ quite largely at most of its frequencies. This creates large troughs in the signal received by the far-end transceiver 102. However, for some specific frequencies, constructive or more precisely less destructive interferences appear when the transmitted signal $s_t$ gets combined with some of its delayed, back-and-forth reflected versions. This explains the typical shape of the channel frequency response 702 for transmission lines with impedance mismatched loop segment as presented in Fig. 7.

In an additional, optional step 606, measurements in the Hlog data and/or consultation of a loop topology database 607 may be exploited to characterize the impedance mismatched segment, e.g. its length, its location along the transmission line, the strength of the mismatch, its impact on the bitrate, etc., as is indicated by 608 in Fig. 6 and as will be explained in more detail here below.

The graph depicted in Fig. 7 presents the channel frequency response 702 of a loop containing a segment with mismatched impedance, in comparison to the channel frequency response 701 of a normal loop.

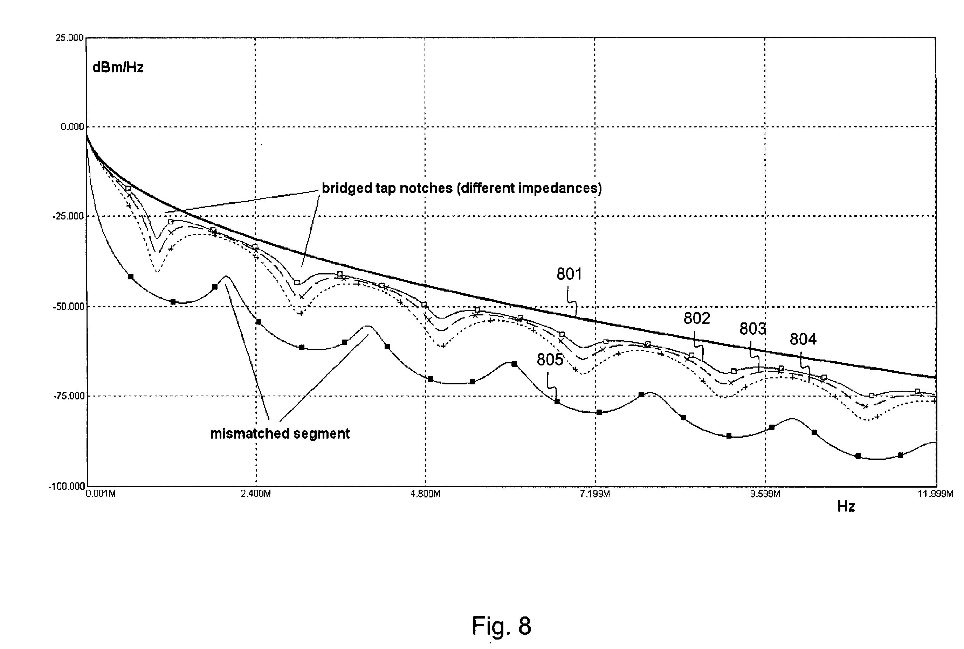

The pattern followed by the channel frequency response in case of a mismatched segment is different from that in case of bridged taps. Indeed, in case of a bridged tap, there is only one point for reflections in the transmission line, caused by the tap. As a consequence, only specific frequencies are candidates to act as destructive interferences in the signal received by the far-end transceiver. This explains the pattern differences seen in Fig. 8 between channel frequency responses 802, 803, and 804 measured for transmission lines with bridged taps and the channel frequency response 805 measured for a transmission line with impedance mismatched loop segment. Fig. 8 further also depicts the channel frequency response 801 for a normal loop without defects.

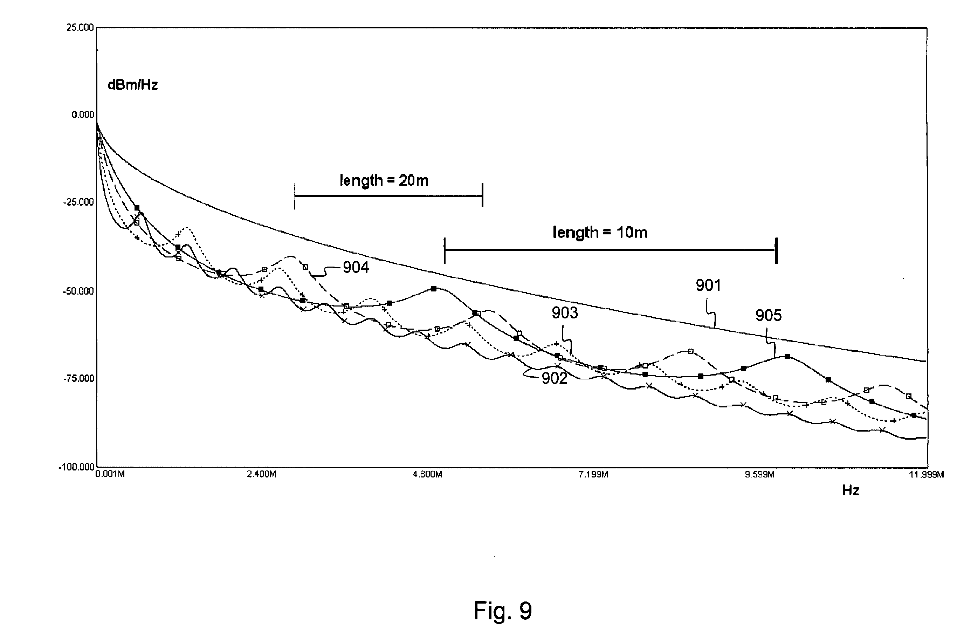

As will be illustrated with reference to Fig. 9, the frequency location of the peaks in the channel frequency response of a transmission line with impedance mismatched loop segment, allows to estimate the mismatched segment length L. Indeed, as these peaks represent constructive (or less destructive) interference and as these constructive interfering waves bounce at least two times before traveling towards the far-end receiver, these waves must have particular frequencies or wavelengths that satisfy the following equation:

$$2L = k\frac{\lambda}{2} \qquad (16)$$

Herein,

L represents the length of the impedance mismatched loop segment;

k represents the integer index of the peak in the channel frequency response; and

$\lambda$ represents the wavelength of the wave inferring constructive interference, with:

$$\lambda = \frac{c}{f} \qquad (17)$$

Herein,

f represents the frequency of the wave inferring constructive interference; and

c represents the propagation speed,

with:

$$c = 2.10^8 \frac{km}{s} \qquad (18)$$

Substituting (18) and (17) in equation (16) hence results in:

$$L = k\frac{c}{4.f} \qquad (19)$$

or

$$L = k\frac{2.10^8}{4.f} \qquad (20)$$

or

$$L[km] = k\frac{200.10^6}{4.f[Hz]} \qquad (21)$$

or

$$L[km] = k\frac{200}{4.f[MHz]} \qquad (22)$$

or

$$L[km] = k\frac{50}{f[MHz]} \qquad (23)$$

When software-programmed, equation (23) allows a digital signal processor to estimate the length L of the impedance mismatched loop segment by detecting a peak or local maximum in the channel frequency response data, determining the integer index k of this local maximum, determining the frequency positions f of the local maximum in megahertz (MHz), and determining the length L of the impedance mismatched loop segment in kilometres as L = 50 * k / f.

This is illustrated by Fig. 9. wherein the location of the first peaks and its harmonics depend on the length L of the impedance mismatched segment, which is estimated 20 meters for the loop with channel frequency response 904 and 10 meters for the loop with channel frequency response 905. Fig. 9 further shows the channel frequency response 901 of a normal loop without defects, and the channel frequency responses 902 and 903 of two other transmission lines impaired by impedance mismatches.

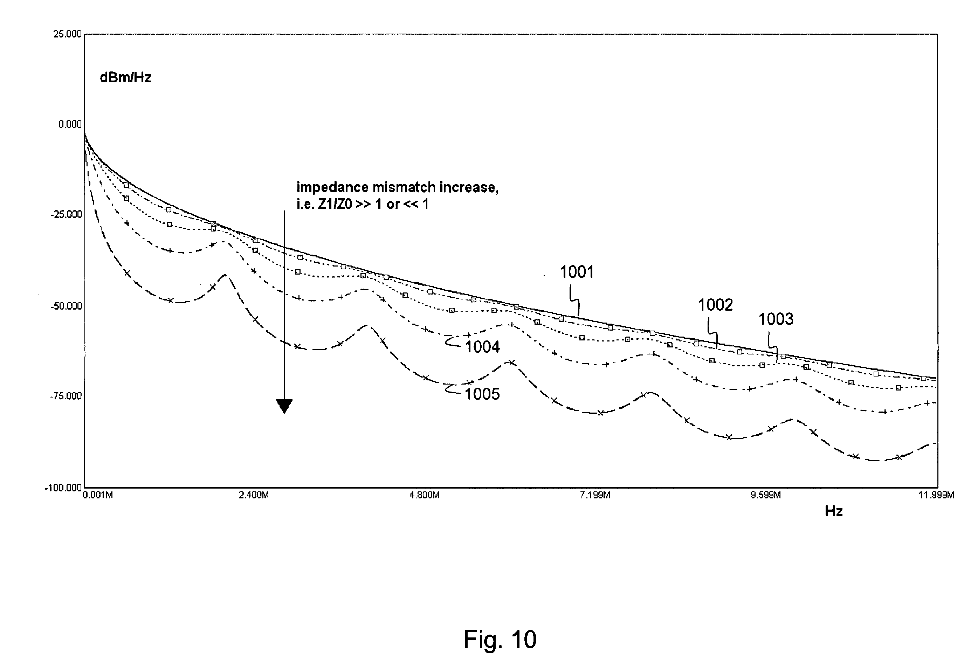

Fig. 10 at last shows that the height of the peaks within the sequence is used as an estimator of the strength of the impedance mismatch $Z_1/Z_0$. Indeed, the height of the peaks, computed in dB, is linearly related to the logarithm of the mismatch between the two impedances at the interface between the two segments.

In order to achieve identification and characterization of an impedance mismatched segment, different algorithmic embodiments can be envisaged, making use of signal processing techniques to mainly prepare or filter the channel frequency response curve in order to select meaningful information to reliably detect local maxima, to recognize their shape, to quantify their height and to estimate their locations. This enables to deduce the length and strength of the impedance mismatched segment. Compared to bridged tap detection, there is a difference in that the method according to the present invention focusses on the detection of peaks and not notches, moreover taking places at shifted, equidistant frequencies. The impedance mismatched segment introduces a sequence of peaks in the Hlog data whereas a bridged tap would introduce a sequence of notches, as seen in Fig. 8.

According to an optional extension, the method according to the invention may consult a loop topology data base of a network analyzer extension platform or the corresponding cable management system belonging to operators, or may be combined with SELT. The purpose of these two optional extensions is to be able to localize the mismatched segment. However, the main advantage of the current invention resides in the fact that it remains non-intrusive.

The main benefit of this invention is to be able to diagnose the presence of an impedance mismatched segment within the loop, typically an old patch cable, and therefore get knowledge about the physical cause of performance degradation. In addition to this root identification, repair advices can be provided to operators in order to take actions to solve such problem, for example by identifying such segment and by replacing it with an impedance matching cable suitable to retrieve optimal performances in terms of bitrate and stability.

The main advantages over the best existing solutions are the ability to detect, characterize and localize the presence of a segment presenting an impedance mismatch within a loop in an automatic and non-intrusive way. Indeed, best existing solutions focus on bridged taps, bad contacts or broken loops and are therefore not able to identify and diagnose the presence of such impedance mismatched segment. Moreover, when using SELT based techniques, service interruption is required. The current invention enables to clearly identify and make the distinction of such mismatched segment without interrupting the service and to propose passive or proactive diagnosis, which means this kind of detection can be automatically reported before any customer complains.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method for detecting and characterising an impedance mismatched loop segment (113) in a transmission line, comprising the steps of:

   a. collecting (602) channel frequency response data (702, 805, 902-905, 1002-1005) from a transceiver (101, 102) coupled to said transmission line; and
   b. detecting (604) in said channel frequency response data (702, 805, 902-905, 1002-1005) a pattern consisting of an alternating sequence of troughs indicative for wide frequency signal reflections and peaks indicative for constructive interference at particular equidistant frequencies, said troughs being wider than said peaks.

2. A method according to claim 1, further comprising the step of:

   c. quantifying at least one parameter of said impedance mismatched loop segment (113) by processing said channel frequency response data (702, 805, 902-905, 1002-1005).

3. A method according to claim 2 wherein said at least one parameter comprises a length of said impedance mismatched loop segment (113), and quantifying said at least one parameter comprises:

   c11. detecting local maxima in said channel frequency response data (702, 805, 902-905, 1002-1005) and indexing said local maxima;
   c12. determining frequency positions f of said local maxima; and
   c13. determining said length of said impedance mismatched loop segment (113) in kilometres as $L = 50 * k / f$ with k representing an index number of a local maximum and f representing a frequency position in megahertz of said local maximum with index number k.

4. A method according to claim 2 wherein said at least one parameter comprises a mismatch strength of said impedance mismatched loop segment (113), and quantifying said at least one parameter comprises:

   c21. detecting local maxima in said channel frequency response data (702, 805, 902-905, 1002-1005) and indexing said local maxima;
   c22. determining heights h of said local maxima; and
   c23. determining said mismatch strength of said impedance mismatched loop (113) segment from $y = a * \ln(Z_2/Z_1) + b$ with y representing a height of a local maximum in decibels, $Z_1$ and $Z_2$ representing characteristic impedances of respectively a first loop segment (111) and said mismatched loop segment (113) in Ohm/meter, and a and b representing model parameters that are determined theoretically or experimentally.

5. A method according to claim 1, further comprising the step of:

   d. consulting a loop topology database (607) in order to determine a location of said impedance mismatched segment (113).

6. A tool for detecting and characterising an impedance mismatched loop segment (113) in a transmission line, comprising:

   a. means for collecting channel frequency response data (702, 805, 902-905, 1002-1005) from a transceiver (101, 102) coupled to said transmission line; and
   b. means for detecting a pattern in said channel frequency response (702, 805, 902-905, 1002-1005) consisting of an alternating sequence of troughs indicative for wide frequency signal reflections and peaks indicative for constructive interference at particular equidistant frequencies, said troughs being wider than said peaks.

Fig. 1

Fig. 2

EP 2 584 710 A1

Fig. 3

Fig. 4

Fig. 5

DSLAM, Port

601 ⟍

| Hlog collection | ⟋ 602 |

| Filtering (High-pass filtering) | ⟋ 603 |

| Pattern recognition (Sequence of peaks identification) | ⟋ 604 |

| Characterization (peaks height, location) | ⟋ 605 |

607

Topology DB

| Inference | ⟋ 606 |

608 ⟍ → mismatched segment detection
→ length of mismatched segment
→ impact on bitrate estimation
→ mismatched segment localization

Fig. 6

Fig. 7

Fig. 8

Fig. 9

Fig. 10

Europäisches
Patentamt

European
Patent Office

Office européen
des brevets

## EUROPEAN SEARCH REPORT

Application Number

EP 11 29 0485

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/081484 A2 (CENTILLIUM COMMUNICATIONS INC [US]; TANG XIANGGUO [US]; FAZLOLLAHI AMI) 3 August 2006 (2006-08-03) | 1,2,6 | INV. H04B3/46 H04M3/30 |
| Y | * page 3; figure 4 * * paragraph [0034] - paragraph [0046] * ----- | 3 | |
| X | US 2010/086105 A1 (DINESH VAIBHAV [IN] ET AL) 8 April 2010 (2010-04-08) | 1,2 | |
| Y | * paragraphs [0045], [0054] - [0055] * ----- | 3 | |
| Y | US 2011/188640 A1 (CIOFFI JOHN M [US] ET AL) 4 August 2011 (2011-08-04) * paragraph [0063] - paragraph [0064] * ----- | 3 | |
| Y | WO 03/061252 A1 (HARRIS CORP [US]) 24 July 2003 (2003-07-24) * page 5, line 37 - page 7, line 17 * ----- | 3 | |
| Y | WO 2004/099711 A1 (ERICSSON TELEFON AB L M [SE]; JENSEN AXEL FRANK [DK]; LINDQVIST FREDRI) 18 November 2004 (2004-11-18) * page 6, line 10 - page 7, line 33; figure 3 * ----- | 3 | TECHNICAL FIELDS SEARCHED (IPC) H04B H04M |
| A | EP 1 734 661 A1 (AWARE INC [US]) 20 December 2006 (2006-12-20) * paragraph [0009] - paragraph [0020] * ----- | 1-6 | |

The present search report has been drawn up for all claims

| Place of search | Date of completion of the search | Examiner |
|---|---|---|
| Munich | 15 March 2012 | Giglietto, Massimo |

EPO FORM 1503 03.82 (P04C01)

**ANNEX TO THE EUROPEAN SEARCH REPORT
ON EUROPEAN PATENT APPLICATION NO.**

EP 11 29 0485

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2012

| Patent document cited in search report | Publication date | Patent family member(s) | Publication date |
|---|---|---|---|
| WO 2006081484 A2 | 03-08-2006 | EP 1842292 A2<br>JP 2008530833 A<br>US 2006251160 A1<br>WO 2006081484 A2 | 10-10-2007<br>07-08-2008<br>09-11-2006<br>03-08-2006 |
| US 2010086105 A1 | 08-04-2010 | NONE | |
| US 2011188640 A1 | 04-08-2011 | AU 2006268292 A1<br>BR PI0613066 A2<br>CA 2614936 A1<br>CN 101233721 A<br>CN 101238645 A<br>EP 1905195 A2<br>JP 2009500985 A<br>JP 2011172238 A<br>US 2008205501 A1<br>US 2011188640 A1<br>WO 2007008835 A2 | 18-01-2007<br>21-12-2010<br>18-01-2007<br>30-07-2008<br>06-08-2008<br>02-04-2008<br>08-01-2009<br>01-09-2011<br>28-08-2008<br>04-08-2011<br>18-01-2007 |
| WO 03061252 A1 | 24-07-2003 | AU 2003202275 A1<br>WO 03061252 A1 | 30-07-2003<br>24-07-2003 |
| WO 2004099711 A1 | 18-11-2004 | AT 381851 T<br>AT 384395 T<br>AU 2004236618 A1<br>AU 2004237642 A1<br>BR PI0410263 A<br>BR PI0410272 A<br>BR PI0410286 A<br>CN 1784586 A<br>CN 1784881 A<br>CN 1784882 A<br>DE 602004010801 T2<br>DE 602004011333 T2<br>DK 1625736 T3<br>EP 1625348 A1<br>EP 1625735 A1<br>EP 1625736 A1<br>ES 2295851 T3<br>JP 4477626 B2<br>JP 2007529139 A<br>KR 20060012602 A<br>KR 20060016781 A<br>KR 20060033716 A<br>MX PA05011766 A<br>MX PA05011767 A | 15-01-2008<br>15-02-2008<br>18-11-2004<br>18-11-2004<br>16-05-2006<br>16-05-2006<br>16-05-2006<br>07-06-2006<br>07-06-2006<br>07-06-2006<br>11-12-2008<br>08-01-2009<br>28-04-2008<br>15-02-2006<br>15-02-2006<br>15-02-2006<br>16-04-2008<br>09-06-2010<br>18-10-2007<br>08-02-2006<br>22-02-2006<br>19-04-2006<br>26-01-2006<br>26-01-2006 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 11 29 0485

This annex lists the patent family members relating to the patent documents cited in  the above-mentioned European search report.
The members are as contained in the European Patent Office EDP file on
The European Patent Office is in no way liable for these particulars which are merely given for the purpose of information.

15-03-2012

| Patent document cited in search report | Publication date | Patent family member(s) | | Publication date |
|---|---|---|---|---|
| | | MX | PA05011800 A | 17-02-2006 |
| | | US | 2005027456 A1 | 03-02-2005 |
| | | WO | 2004099711 A1 | 18-11-2004 |
| | | WO | 2004100512 A1 | 18-11-2004 |
| | | WO | 2004100513 A1 | 18-11-2004 |
| EP 1734661 A1 | 20-12-2006 | NONE | | |

EPO FORM P0459

For more details about this annex : see Official Journal of the European Patent Office, No. 12/82